# EUROPEAN PATENT APPLICATION

(11) **EP 3 992 473 A1**
(43) Date of publication of application: **04.05.2022**
(21) Application number: 20832345.1
(22) Date of filing: 20.05.2020
(51) Int. Cl.: F16B 5/08, F16B 11/00, B23K 26/382, B32B 15/08, B32B 15/092, B29C 65/48, B32B 7/12

(54) **JOINT STRUCTURE**

(30) Priority: 25.06.2019 JP 2019117718
(71) Applicant: OMRON Corporation, Shiokoji-dori, Shimogyo-Ku Kyoto-shi Kyoto 600-8530 (JP)
(72) Inventor: SATO, Daisuke, Kyoto-shi, Kyoto 600-8530 (JP)
(74) Representative: Becker, Eberhard
(86) International application number: PCT/JP2020/019853
(87) International publication number: WO 2020/261821

(57) **Abstract**

Provided is a joint structure having excellent thermal shock resistance and a high joint strength. A joint structure according to an embodiment of the present invention is provided with: a first member that is made of a metal material and has a plurality of holes formed in the surface thereof and having opening diameters of 30-100 µm; a third member that is made of a thermoplastic resin or a metal material which is the same as or different from that of the first member and that has a plurality of independent holes formed in the surface thereof and having opening diameters of 3-100 µm; and a second member that is made of a curable resin and joins the surface in which the holes of the first member are formed and the surface in which the holes of the third member are formed.

## Description

### Technical Field

The present invention relates to a joint structure and the use thereof.

### Related Art

Patent literature 1 discloses a manufacturing method of a composite molded body, including: a process of using a continuous wave laser to continuously irradiate a laser beam on a joint surface of a metal molded body, which is a first molded body, at an irradiation rate of 200 mm/sec or more; a process of forming an adhesive layer on the joint surface of the metal molded body on which a laser beam is irradiated in the previous process; and a process of adhering a second molded body to the joint surface of the metal molded body serving as the first molded body, to which an adhesive is applied in the previous process.

### Literature of Related Art

### Patent Literatures

Patent literature 1: Japanese Patent Laid-Open No. 2015-213961

### SUMMARY OF INVENTION

### Problems to be Solved

According to the manufacturing method of a composite molded body according to Patent literature 1, a composite molded body can be provided with excellent tensile strength both when the composite molded body is pulled in a direction parallel to the joint surface and when the composite molded body is pulled in a direction perpendicular to the joint surface.

However, in the invention according to Patent literature 1, because the second molded body is not processed, there is a possibility that a joint strength on the second molded body side cannot be sufficiently obtained when an expansion/contraction force caused by thermal shock or the like is applied. In addition, because the joint surface of the first molded body is roughened by the continuous wave laser, the joint surface of the first molded body has a non-uniform shape. Thereby, when an expansion/contraction force caused by thermal shock or the like is applied, the first molded body has a stress concentration point, and thus there is still room for improvement in the joint strength.

Therefore, the present inventor has found that it is difficult to obtain a composite molded body having thermal shock resistance and an excellent joint strength even if an adhesive having oil resistance and chemical resistance is used in the conventional method.

In one aspect, the present invention has been made in view of this circumstance, and an objective of the present invention is to provide a joint structure having excellent thermal shock resistance and exhibiting a high joint strength.

### Means to Solve Problems

In order to solve the problems described above, a joint structure according to one aspect of the present invention includes: a first member that is made of a metal material and has a plurality of holes having an opening diameter of 30 to 100 µm formed in a surface thereof; a third member that is made of a metal material the same as or different from that of the first member, or a thermoplastic resin, and has a plurality of independent holes having an opening diameter of 30 to 100 µm formed in a surface thereof; and a second member that is made of a curable resin and joins the surface of the first member in which the holes are formed and the surface of the third member in which the holes are formed.

### Effects of Invention

According to one aspect of the present invention, a joint structure having excellent thermal shock resistance and a high joint strength can be provided.

### BRIEF DESCRIPTION OF THE DRAWINGS

FIG. 1 schematically illustrates an example of a cross section of a joint structure according to an embodiment.
FIG. 2 schematically illustrates an example of the cross section of the joint structure according to the embodiment.
FIG. 3 schematically illustrates an example of the cross section of the joint structure according to the embodiment.
FIG. 4 schematically illustrates an example of the cross section of the joint structure according to the embodiment.
FIG. 5 schematically illustrates an example of the cross section of the joint structure according to the embodiment.
FIG. 6 schematically illustrates an example of the cross section of the joint structure according to the embodiment.
FIG. 7 schematically illustrates an example of the cross section of the joint structure according to the embodiment.
FIG. 8 schematically illustrates an example of the cross section of the joint structure according to the embodiment.
FIG. 9 schematically illustrates an example of the cross section of the joint structure according to the embodiment.
FIG. 10 schematically illustrates an example of the cross section of the joint structure according to the embodiment.
FIG. 11 schematically shows a manufacturing process of a joint structure in Example 1.
FIG. 12 schematically shows a manufacturing process of a joint structure in Comparative example 1.
FIG. 13 schematically shows a manufacturing process of a joint structure in Example 5.
FIG. 14 schematically shows a cross section of the joint structure in Comparative example 1.
FIG. 15 schematically shows a cross section of a joint structure in Comparative example 2.

### DESCRIPTION OF THE EMBODIMENTS

Hereinafter, an embodiment according to one aspect of the present invention (hereinafter, also referred to as "the embodiment") is described with reference to the drawings.

### §1 Application Example

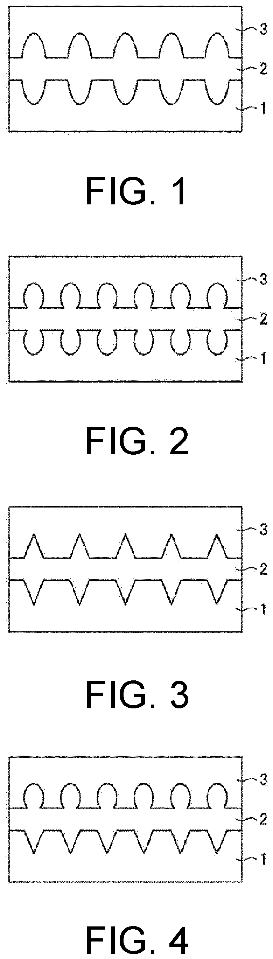

First, an outline of a joint structure according to one aspect of the present invention is described with reference to FIG. 1. FIG. 1 schematically illustrates an example of a cross section of a joint structure according to the embodiment.

In FIG. 1, a joint structure is exemplified which includes: a first member 1 that is made of a metal material and has a plurality of holes having an opening diameter of 30 to 100 µm formed in the surface thereof; a third member 3 that is made of a metal material the same as or different from that of the first member, or a thermoplastic resin, and has a plurality of holes having an opening diameter of 30 to 100 µm formed in the surface thereof; and a second member 2 that is made of a curable resin and joins the surface of the first member in which the holes are formed and the surface of the third member in which the holes are formed. In other words, the first member 1 and the third member 3 are joined via the second member 2. Note that, FIG. 1 shows the cross section parallel to a depth direction of the hole.

Because the second member 2 which is made of a curable resin is filled in the holes formed in the first member 1 and the third member 3 and cured, a physically robust anchor effect is obtained. Thereby, a joint structure having excellent thermal shock resistance and exhibiting a high joint strength can be obtained. In addition, by performing surface processing for forming holes in the surfaces of the first member 1 and the third member 3, impurities in the surfaces can be removed and the adhesion strength can be improved. In addition, by forming the plurality of holes in the surfaces of the first member 1 and the third member 3, the stress applied to the joint portion is dispersed, and a joint structure in which stress concentration is avoided can be provided.

Moreover, as the curable resin, there are also adhesives that are easy to adhere to metal but difficult to adhere to resin. Therefore, when the first member and the third member are made of different materials, restrictions may occur on the selection of the adhesive in adhesion performed only by chemical bonding. However, because the joint structure further has physical bonding due to the anchor effect, the choice of the adhesive is expanded, and adhesives having oil resistance and chemical resistance can be selected. As a result, a joint structure having oil resistance and chemical resistance, having excellent thermal shock resistance, and exhibiting a high joint strength can be obtained.

### §2 Configuration Example

### <First Member>

The first member is made of a metal material and has the plurality of holes having an opening diameter of 30 to 100 µm formed in the surface thereof. An example of the metal material may be iron-based metal, stainless-based metal, copper-based metal, aluminum-based metal, magnesium-based metal, or alloys thereof. In addition, the metal material may be a metal molded body, and may also be zinc die-cast, aluminum die-cast, powder metallurgy, or the like.

### <Third Member>

The third member is made of a metal material the same as or different from that of the first member, or a thermoplastic resin, and has the plurality of holes having an opening diameter of 30 to 100 µm formed in the surface thereof. An example of the metal material used as the third member may be the metal material exemplified for the metal material used as the first member. The third member may be made of the same metal material as the first member, or a different metal material from the first member.

An example of the thermoplastic resin may be: PVC (polyvinylchloride), PS (polystyrene), AS (acrylonitrile-styrene copolymer), ABS (acrylonitrile-butadiene-styrene copolymer), PMMA (polymethyl methacrylate), PE (polyethylene), PP (polypropylene), PC (polycarbonate), m-PPE (modified polyphenylene ether), PA6 (polyamide 6), PA66 (polyamide 66), POM (polyacetal), PET (polyethylene terephthalate), PBT (polybutylene terephthalate), PSF (polysulfone), PAR (polyarylate), PEI (polyetherimide), PPS (polyphenylene sulfide), PES (polyethersulfone), PEEK (polyetheretherketone), PAI (polyamideimide), LCP (liquid crystal polymer), PVDC (polyvinylidene chloride), PTFE (polytetrafluoroethylene), PCTFE (polychlorotrifluoroethylene), or PVDF (polyvinylidene fluoride). In addition, the thermoplastic resin may be TPE (thermoplastic elastomer), and an example of TPE may be TPO (olefin-based), TPS (styrene-based), TPEE (ester-based), TPU (urethane-based), TPA (nylon-based), or TPVC (vinyl chloride-based).

### <Second Member>

The second member is made of a curable resin that joins the surface of the first member in which the holes are formed and the surface of the third member in which the holes are formed.

The curable resin may be a reactive curable resin. The reactive curable resin may be, for example, a thermosetting resin that is cured by forming a crosslinked structure by heating, a photocurable resin that is cured by forming a crosslinked structure by irradiating light, or the like.

An example of the reactive curable resin may be an epoxy (EP) resin, a polyurethane (PUR) resin, a urea formaldehyde (UF) resin, a melamine formaldehyde (MF) resin, a phenol formaldehyde (PF) resin, an unsaturated polyester (UP) resin, a silicone (SI) resin, or an acrylic resin. In addition, the reactive curable resin may be a fiber reinforced plastic (FRP).

In addition, the curable resin may also be an epoxy resin. From the viewpoint of achieving both the oil resistance and chemical resistance and the thermal shock resistance in a well-balanced manner, the reactive curable resin is preferably the epoxy resin.

A filler may be further added to the second member. An example of the filler may be an inorganic filler (including glass fiber, inorganic salt, and the like), a metal-based filler, an organic filler, a carbon fiber, or the like.

The viscosity of the curable resin before curing is preferably 10,000 to 300,000 mPa- s, more preferably 25,000 to 90,000 mPa·s, and further preferably 50,000 to 75,000 mPa·s at 25°C. When the viscosity of the curable resin before curing is within the above range, the curable resin is easily filled in the hole, and thus the anchor effect is easily exhibited and the effect of improving the joint strength is achieved. The viscosity (mPa-s) can be measured, for example, at 25°C, using a rotational viscometer (Brookfield meter) (manufactured by EKO Instruments Co., Ltd.).

The Shore D hardness of the curable resin after curing is preferably 30 to 90, more preferably 50 to 90, and further preferably 70 to 90. When the Shore D hardness of the curable resin after curing is within the above range, in addition to the thermal shock resistance, even the oil resistance and the chemical resistance can also be ensured. Note that, the Shore D hardness is measured in accordance with JISK6253.

### <Hole>

The opening diameter of the hole is preferably 30 to 100 µm.

The holes are independent of each other. That is, when viewed from a direction perpendicular to the surface in which the holes are formed, opening portions of the holes do not overlap, and boundary lines between the holes are clear. Thus, the hole is different from a continuous groove. The holes are independent of each other, and thereby the surface areas of the first member and the third member are increased. Thereby, because the contact areas of the first member and the third member with the second member are increased, the effect of improving the physical joint strength is achieved.

The shape of the opening portion of the hole is not particularly limited, and may be, for example, circular or polygonal. If the shape of the opening portion is circular, the hole is easily formed. In addition, for example, the diameter of the cross section perpendicular to the depth direction of the hole may be constant from the opening portion toward the depth direction, may be increased and then reduced from the opening portion toward the depth direction, or may be reduced from the opening portion toward the depth direction. The diameter of the cross section perpendicular to the depth direction of the hole is preferably increased and then reduced from the opening portion toward the depth direction. In other words, the shape of the hole preferably has a constriction in the depth direction. With this configuration, the effect of locking the second member is exhibited. That is, when a force parallel to the depth direction of the hole acts, it becomes difficult to pull out the second member cured inside the hole to the outside of the hole, and the effect of improving the physical joint strength is achieved. The change in the diameter of the cross section perpendicular to the depth direction of the hole from the opening portion toward the depth direction may be curved or linear.

The pitch of the hole is not particularly limited, and can be appropriately changed according to the opening diameter of the hole, the volumes of the first member and the third member, and the like. Here, the lower limit value of the pitch of the holes is a distance at which the holes do not overlap. For example, the pitch of the hole is preferably 50 to 200 µm, more preferably 50 to 150 µm, and further preferably 50 to 80 µm. The pitch of the hole can be adjusted by, for example, controlling an irradiation interval of laser irradiation.

The depth of the hole is not particularly limited, and can be appropriately changed according to the opening diameter of the hole, the volumes of the first member and the third member, and the like. For example, the depth of the hole is preferably 30 to 100 µm.

The shapes of the holes in the first member and the third member may be the same. For example, as shown in FIG. 1 described above, the first member 1 formed with holes having a shape in which the opening portion is circular and the diameter of the cross section perpendicular to the depth direction is reduced in a curve toward the depth direction, and the third member 3 formed with holes having a shape, the same as that of the first member 1, in which the opening portion is circular and the diameter of the cross section perpendicular to the depth direction is reduced in a curve toward the depth direction may be joined via the second member 2.

The hole may also have the shape shown in FIGS. 2 to 10. FIGS. 2 to 10 schematically show an example of the cross section of the joint structure according to the embodiment parallel to the depth direction of the hole, respectively.

The shape of the hole may be a shape in which the opening portion is circular and the diameter of the cross section perpendicular to the depth direction is increased in a curve and then reduced toward the depth direction as shown in FIG. 2, and may also be a conical shape as shown in FIG. 3.

Alternatively, the shapes of the holes in the first member and the third member may be different. For example, as shown in FIG. 4, the first member 1 formed with conical holes and the third member 3 formed with holes having a shape in which the opening portion is circular and the diameter of the cross section perpendicular to the depth direction is increased in a curve and then reduced toward the depth direction may be joined via the second member 2.

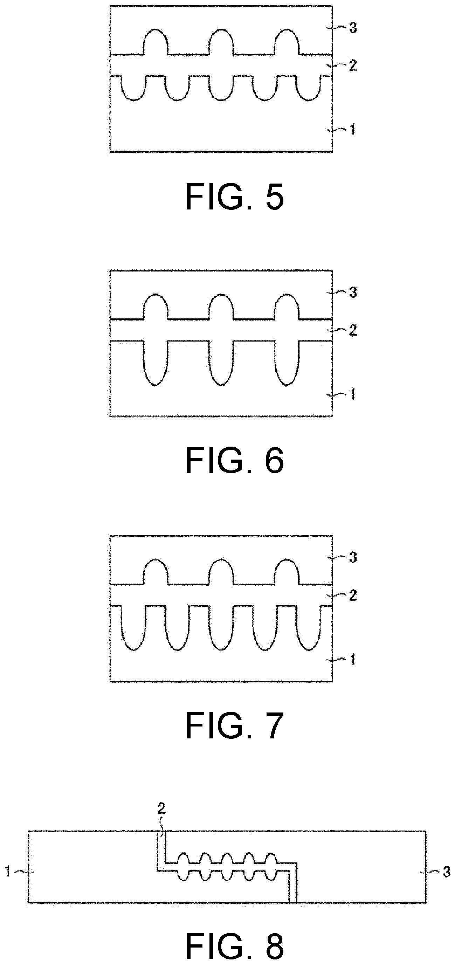

In addition, the pitches of the holes in the first member and the third member may be the same as or different from each other. For example, as shown in FIG. 5, when the linear expansion coefficients of the first member 1 and the third member 3 are substantially the same, but the volume of the first member 1 is larger than that of the third member 3, the pitch of the holes in the first member 1 may be smaller than the pitch of the holes in the third member 3. Even when materials with similar linear expansion coefficients are adhered to each other, if the volumes of these materials are different, the difference in the amount of expansion and contraction due to thermal shock can be large. According to the above configuration, the difference in the amount of expansion and contraction due to thermal shock can be reduced, and the joint structure achieving both the oil resistance and chemical resistance and the thermal shock resistance can be further obtained.

In addition, the depths of the holes in the first member and the third member may be the same as or different from each other. For example, as shown in FIG. 6, when the linear expansion coefficients of the first member 1 and the third member 3 are substantially the same, but the volume of the first member 1 is larger than that of the third member 3, the depth of the hole in the first member 1 may be deeper than the depth of the hole in the third member 3. With the above configuration, the difference in the amount of expansion and contraction due to thermal shock can be reduced, and the joint structure achieving both the oil resistance and chemical resistance and the thermal shock resistance can be further obtained.

Furthermore, both the pitches of the holes and the depths of the holes in the first member and the third member may be different between the first member and the third member. For example, as shown in FIG. 7, when the volume of the first member 1 is larger than that of the third member 3, the pitch of the holes in the first member 1 may be smaller than the pitch of the holes in the third member 3, and the depth of the hole in the first member 1 may be deeper than the depth of the hole in the third member 3.

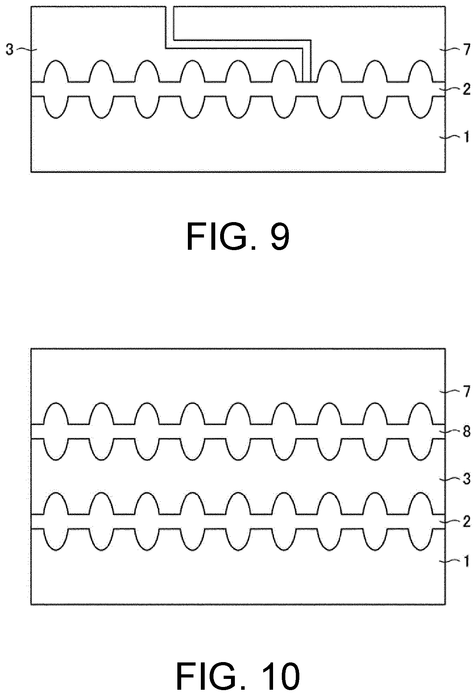

Alternatively, as shown in FIG. 8, the first member 1 and the third member 3 may also be joined on a surface other than the surface in which the holes are formed via the second member 2. In addition, as shown in FIG. 9, in addition to the third member 3, another member 5 may be joined to the first member 1 via the second member 2. The above-described holes may also be formed in the surface of the another member 7. In addition, the another member 7 may be made of the metal material exemplified as the first member or the third member, or a thermoplastic resin. Furthermore, as shown in FIG. 10, the third member 3 may be joined to the another member 7 via another adhesive 8 on a surface different from the surface on which the third member 3 is joined to the first member 1. The above-described holes can also be formed in the surface of the third member 3 different from the surface on which the third member 3 is joined to the first member 1. The other adhesive 8 may be made of a curable resin exemplified as the second member.

### <Manufacturing Method of Joint Structure>

The joint structure can be manufactured by, for example, a manufacturing method including a process of joining the surface of the first member in which the holes are formed and the surface of the third member in which the holes are formed via the second member.

The hole is preferably formed by laser irradiation. As the type of the laser for forming the hole, a fiber laser, a YAG laser, a YVO₄ laser, a semiconductor laser, a carbon dioxide gas laser, an excimer laser, or the like can be selected, and a fiber laser or the like is preferable in consideration of the laser wavelength.

For example, the second member is applied to the surface of the first member in which the holes are formed, the surface of the third member in which the holes are formed, or both of the surfaces, and then the surface of the third member in which the holes are formed is superposed on the surface of the first member in which the holes are formed, so that the surfaces are in contact with each other. Here, the region where the first member is superposed on the third member may be pressurized. Then, by curing the second member, a joint structure can be obtained.

In addition, before the second member is applied, the second member may be treated by ultraviolet ray irradiation or the like so that OH groups in the second member are exposed. Alternatively, heating or evacuation may be performed when the second member is applied and/or after the second member has been applied. By these treatments, the surface tension generated when the second member is filled in the hole is reduced, and the second member is easily filled in the hole. The method of curing the second member is not particularly limited as long as the second member is sufficiently cured.

### <Use of Joint Structure>

The joint structure can be used in, for example, a switch, a photoelectric sensor, and a proximity sensor.

Generally, the photoelectric sensor has a structure in which internal components such as a substrate and the like are sealed by a metal housing. Conventionally, in a case of being sealed by a metal housing, the internal components are welded or joined by an adhesive without processing the surface. However, in the welding, the internal components such as a substrate and the like may be damaged by heat. In addition, in the method of joining by an adhesive without processing the surface, the internal components are easy to be peeled off, and there is room for improvement in the joint strength. In addition, in the switch, photoelectric sensor, and proximity sensor, there are parts that require joining of metal and resin in addition to joining of metals, and conventionally, metal and resin are directly joined. However, in this method, the metal and the resin tend to be easily peeled off.

The switch, photoelectric sensor, or proximity sensor including the joint structure has a high joint strength and can further reduce thermal damage to the internal components.

The present invention is not limited to each embodiment described above, various changes can be made within the scope of claims, and embodiments obtained by appropriately combining technical mechanisms disclosed in each of the different embodiments are also included in the technical scope of the present invention.

### [Summary]

The joint structure according to one aspect of the present invention includes: a first member that is made of a metal material and has a plurality of holes having an opening diameter of 30 to 100 µm formed in a surface thereof; a third member that is made of a metal material the same as or different from that of the first member, or a thermoplastic resin, and has a plurality of independent holes having an opening diameter of 30 to 100 µm formed in a surface thereof; and a second member that is made of a curable resin and joins the surface of the first member in which the holes are formed and the surface of the third member in which the holes are formed.

The curable resin can be cured by a cross-linking reaction. In the above configuration, the curable resin is applied to the surfaces in which the holes are formed and cured, and thereby the curable resin is filled in the holes and a physically robust anchor effect is obtained. Thereby, a joint structure having excellent thermal shock resistance and exhibiting a high joint strength can be obtained. In addition, by performing surface processing for forming holes in the surfaces, impurities in the surfaces of the member can be removed, and the adhesion strength can be improved. In addition, by forming the plurality of holes, the stress applied to the joint portion is dispersed, and a joint structure in which stress concentration is avoided can be provided. The opening diameter of the hole can be measured as a maximum diameter of the opening portion of the hole in the surface made of a metal material.

In the joint structure according to one aspect, the curable resin may be a reactive curable resin. The reactive curable resin can be cured by forming a crosslinked structure by external energy. With this configuration, the first member and the third member can be joined at a temperature lower than that of welding, and thermal damage to the members included in the joint structure can be reduced.

In the joint structure according to one aspect, the reactive curable resin may be an epoxy resin. According to the configuration, in addition to the thermal shock resistance, even the oil resistance and the chemical resistance can also be ensured. The epoxy resin can contain at least one epoxy group.

In the joint structure according to one aspect, the viscosity of the curable resin before curing may be 25,000 to 90,000 mPa·s at 25°C. According to the configuration, the curable resin is easily filled in the hole, and thus the anchor effect is easily exhibited and the effect of improving the joint strength is achieved.

In the joint structure according to one aspect, the Shore D hardness of the curable resin after curing may be 30 to 90. According to the configuration, in addition to the thermal shock resistance, even the oil resistance and the chemical resistance can also be ensured.

In the joint structure according to one aspect, the diameter of the cross section perpendicular to the depth direction of the hole may be increased and then reduced from the opening portion toward the depth direction, or may be reduced from the opening portion in the depth direction. According to the configuration, the anchor effect is easily exhibited, and thus the stability of the thermal shock resistance is ensured.

In the joint structure according to one aspect, the pitch of the holes may be 50 to 200 µm. Here, the lower limit of the pitch of the holes is a distance at which the holes do not overlap. According to the configuration, the holes are regularly arranged, and thus the stress applied to the joint portion is uniformly dispersed, and the stress concentration is easily avoided. The pitch of the holes can be measured as a distance from the center of a hole to the center of a hole adjacent thereto.

A switch according to one aspect of the present invention includes the joint structure.

A photoelectric sensor according to one aspect of the present invention includes the joint structure.

A proximity sensor according to one aspect of the present invention includes the joint structure.

### Examples

Hereinafter, the present invention is described in more detail based on examples, but the present invention is not limited to the following examples.

### [Example 1]

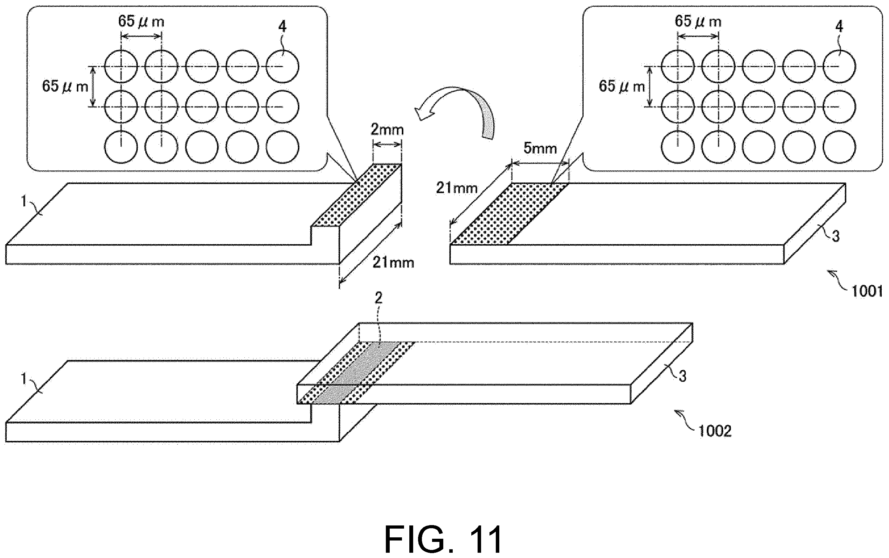

FIG. 11 is a diagram showing a manufacturing process of a joint structure in Example 1. Process 1001 in FIG. 11 shows a process of forming holes 4 in the surfaces of the first member 1 and the third member 3. SUS304 (50 mm × 25 mm, the thickness of 3 mm) was used as the first member 1, SUS304 (50 mm × 25 mm, the thickness of 1 mm) was used as the third member 3, and a thermosetting epoxy adhesive (the viscosity before curing: 35,000 mPa; the Shore D hardness: 80) was used as the second member 2. Pulse laser irradiation was performed using a fiber laser marker MX-Z2000H (manufactured by OMRON Corporation) in a range of 2 mm × 21 mm from one end of the first member 1 in the longitudinal direction and a range of 5 mm × 21 mm from one end of the third member 3 in the longitudinal direction, and thereby a plurality of holes 4 were formed in the surface of each member in a manner that the pitch of the holes was 65 µm.

Process 1002 in FIG. 11 shows a process of joining the surface of the first member 1 in which the holes are formed and the surface of the third member 3 in which the holes are formed. The second member 2 was applied to the surface of the first member 1 in which the holes 4 were formed, and as shown in Process 1002 in FIG. 11, the surface of the third member 3 in which the holes 4 were formed was superposed on the surface of the first member 1 in which the holes 4 were formed so that the surfaces were in contact with each other, and the surfaces were pressurized. Next, the second member 2 was cured by heating in an oven at 70°C for 90 minutes, and thereby a joint structure was produced. Table 1 shows pulse laser irradiation conditions required when the holes were formed. The joint structure of Example 1 had the structure shown in FIG. 1.

### [Examples 2 to 4]

Three joint structures were produced in the same manner as in Example 1 except that the pulse laser irradiation conditions required when the holes were formed were respectively changed.

Table 1 shows the pulse laser irradiation conditions required when the holes were formed. The joint structures of Examples 2 to 4 respectively had the structures shown in FIGS. 2 to 4.

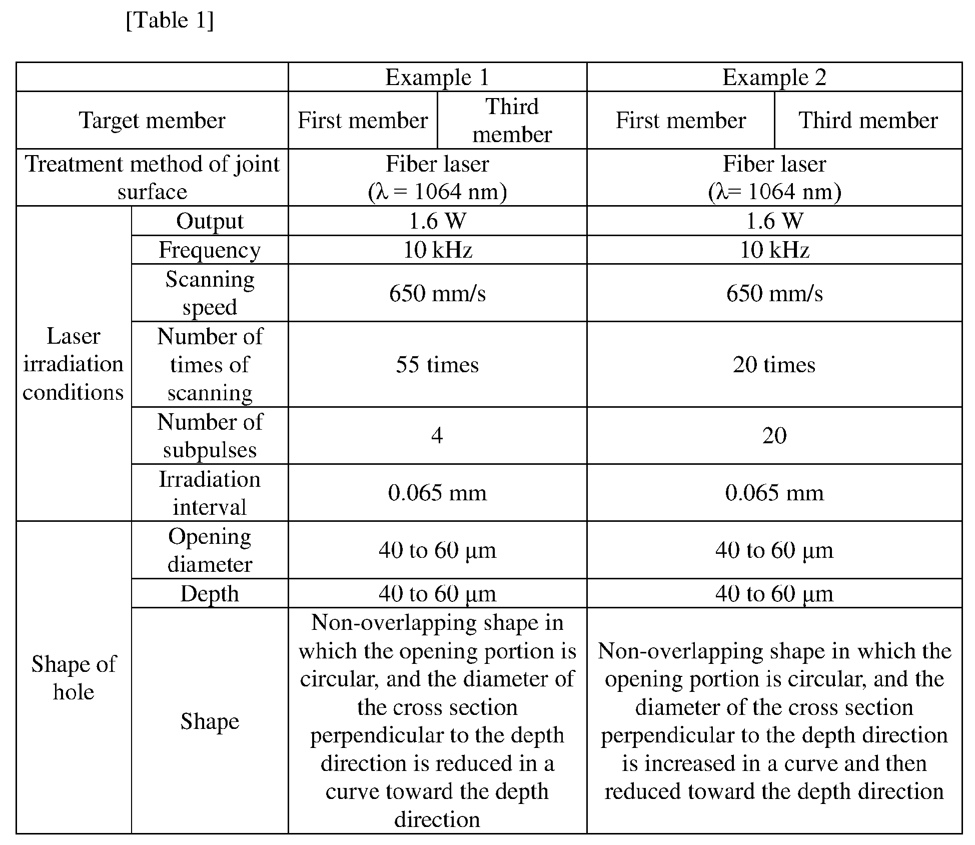

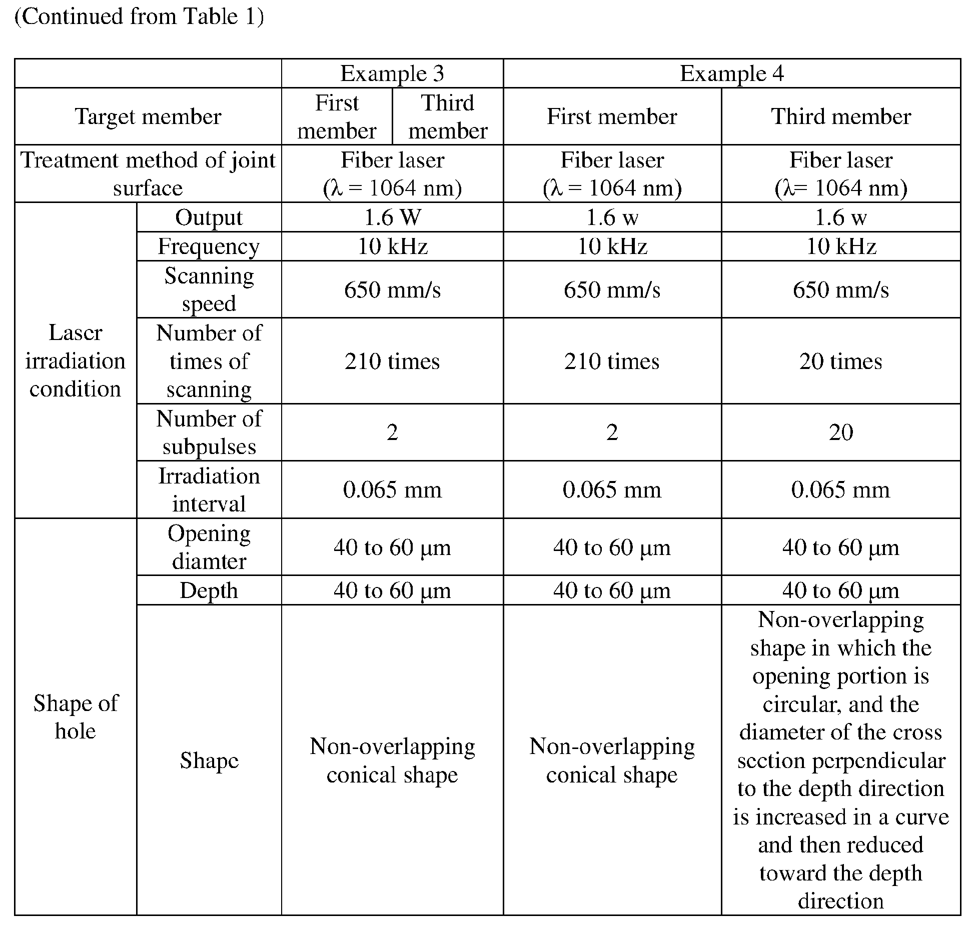

### [Comparative Example 1]

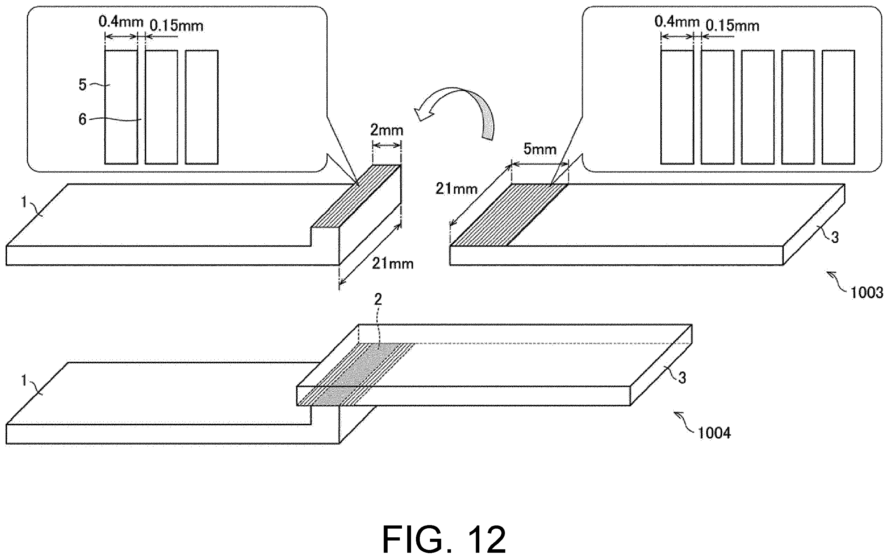

FIG. 12 is a diagram showing a manufacturing process of a joint structure in Comparative example 1. Process 1003 in FIG. 12 shows a process of forming the holes in the surfaces of the first member 1 and the third member 3. Instead of the hole formation in Example 1, laser irradiation was performed using a YAG laser ML-2150A (manufactured by Miyachi Technos)to form an uneven shape on the joint surface of the members by continuous wave processing in a manner that the width of a recess portion 5 was 0.4 mm, and the width of a convex portion 6 between the adjacent recess portions 5 was 0.15 mm as shown in Process 1003 in FIG. 12. That is, a groove shape was formed.

Process 1004 in FIG. 2 shows a process of joining the surface of the first member in which the uneven shape is formed and the surface of the third member in which the uneven shape is formed.

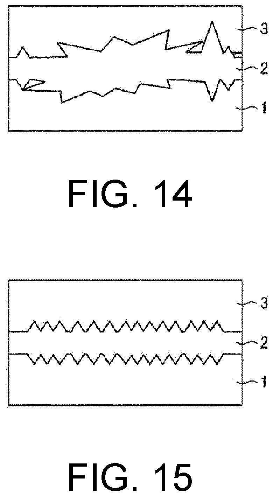

The second member 2 was applied to the surface of the first member 1 in which the uneven shape was formed, and as shown in Process 1004 in FIG. 12, the surface of the third member 3 in which the uneven shape was formed was superposed on the surface of the first member 1 in which the uneven shape was formed so that the surfaces were in contact with each other, and the surfaces were pressurized. Next, the second member 2 was cured by heating in an oven at 70°C for 90 minutes, and thereby a joint structure was produced. Table 2 shows the laser irradiation conditions. The joint structure of Comparative example 1 had the structure shown in FIG. 14. Note that, FIG. 14 shows a cross section parallel to a depth direction of the recess portion and a longitudinal direction of the recess portion.

### [Comparative Example 2]

Instead of the hole formation in Example 1, a joint structure was produced by the same method as in Example 1 except that the surface was treated by sandblasting. Table 2 shows sandblasting conditions. Here, the sandblasting was performed under the condition that a center line average roughness (Ra) representing the surface roughness was 5 to 10 µm. The joint structure of Comparative example 2 had the structure shown in FIG. 15. Note that, FIG. 15 shows a cross section parallel to the depth direction of the recess portion.

**[Table 2]**

| | | Comparative example 1 | | Comparative example 2 | |
|---|---|---|---|---|---|
| Target member | | First member | Third member | First member | Third member |
| Treatment method of joint surface | | YAG laser (λ = 1070 nm) | | Sandblasting (Ra: 5 to 10 µm) | |
| Laser irradiation conditions | Output | 1.6 W | | - | |
| | Frequency | Pseudo continuous wave | | - | |
| | Scanning speed | 5 mm/s | | - | |
| | Number of times of scanning | 5 times | - | | |
| | Number of subpulses | - | | | |
| | Irradiation interval | 0.3 mm | - | | |
| Shape of recess portion | Width of recess portion | 0.4 mm | - | | |
| | Depth | 50 to 100 µm | 5 to 10 µm | | |
| | Shape | Overlapping linear unevenness | Unevenness | | |

### [Example 5]

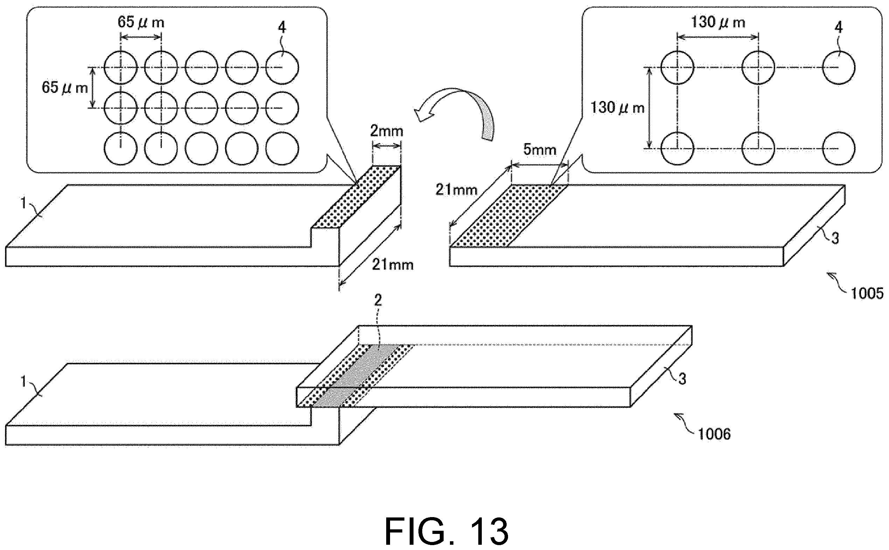

FIG. 13 is a diagram showing a manufacturing process of a joint structure in Example 5. SUS304 (50 mm × 25 mm, the thickness of 3 mm) was used as the first member 1, a PBT plate (50 mm × 25 mm, the thickness of 3 mm) containing 30% by weight of glass filler was used as the third member 3, and a thermosetting epoxy adhesive (the viscosity before curing: 35,000 mPa; the Shore D hardness: 80) was used as the second member 2. Here, the linear expansion coefficient of the first member was half that of the second member and the third member.

Pulse laser irradiation was performed using a fiber laser marker MX-Z2000H (manufactured by OMRON Corporation) in a range of 2 mm × 21 mm from one end of the first member 1 in the longitudinal direction and a range of 5 mm × 21 mm from one end of the third member 3 in the longitudinal direction, and thereby the plurality of holes 4 were formed in the surface of each member in a manner that the pitch of the holes in the first member was 65 µm and the pitch of the holes in the third member was 130 µm.

Process 1006 in FIG. 13 shows a process of joining the surface of the first member in which the holes are formed and the surface of the third member in which the holes are formed. In the same manner as in Example 1, the second member 2 was applied to the surface of the first member 1 in which the holes 4 were formed, and as shown in Process 1006 in FIG. 13, the surface of the third member 3 in which the holes 4 were formed was superposed on the surface of the first member 1 in which the holes 4 were formed so that the surfaces were in contact with each other, and the surfaces were pressurized. Next, the second member was cured by heating in an oven at 70°C for 90 minutes, and a joint structure was produced. Table 3 shows the pulse laser irradiation conditions required when the holes were formed.

### [Example 6]

A joint structure was produced in the same manner as in Example 5 except that the pulse laser irradiation conditions were changed. Table 3 shows the pulse laser irradiation conditions required when the holes were formed.

**[Table 3]**

| | | Example 5 | | Example 6 | |
|---|---|---|---|---|---|
| Target member | | First member | Third member | First member | Third member |
| Treatment method of joint surface | | Fiber laser (λ = 1064 nm) | Fiber laser (λ = 1064 nm) | Fiber laser (λ = 1064 nm) | Fiber laser (λ = 1064 nm) |
| Laser irradiation condition | Output | 1.6 W | 1.6 w | 1.6 w | 1.6 w |
| | Frequency | 10 kHz | 10 kHz | 10 kHz | 10 kHz |
| | Scanning speed | 650 mm/s | 1300 mm/s | 650 mm/s | 1300 mm/s |
| | Number of times of scanning | 55 times | 10 times | 210 times | 10 times |
| | Number of subpulses | 4 | 5 | 2 | 5 |
| | Irradiation interval | 0.065 mm | 0.130 mm | 0.065 mm | 0.130 mm |
| Shape of hole | Opening diamter | 40 to 60 µm | 60 to 80 µm | 40 to 60 µm | 60 to 80 µm |
| | Depth | 40 to 60 µm | 60 to 80 µm | 40 to 60 µm | 60 to 80 µm |
| | Shape | Non-overlapping shape in which the opening portion is circular, and the diameter of the cross section perpendicular to the depth direction is reduced in a curve toward the depth direction | Non-overlapping shape in which the opening portion is circular, and the diameter of the cross section perpendicular to the depth direction is reduced in a curve toward the depth direction | Non-overlapping conical shape | Non-overlapping shape in which the opening portion is circular, and the diameter of the cross section perpendicular to the depth direction is reduced in a curve toward the depth direction |

### [Evaluation of Joint Performance]

The joint performance was evaluated by the following method using the joint structures of Examples 1 to 6 and the joint structures of Comparative examples 1 and 2 described above.

Before a thermal shock test and after 100 cycles of the thermal shock test, a tensile test of the obtained joint structure was performed, and the destruction state of the joint portion caused by the tensile test was evaluated. Here, in the thermal shock test, the treatment performed at - 40°C for 30 minutes and then performed at 70°C for 30 minutes was set as one cycle, and other conditions were based on JIS C 60068-2-14. In addition, the tensile test was performed using an electromechanical type universal testing machine 5900 manufactured by Instron Corporation. Specifically, the test was conducted at a tensile speed of 5 mm/min in a shearing direction, and the test was finished when the second member was broken, or when the second member was completely peeled off from the surface of the first member and/or the surface of the third member (when the joint interface was broken).

The results are shown in Table 4. In the table, a "○" mark and a "×" mark respectively represent the following states.

○: the case where the second member is not peeled off from the surface of the first member and/or the surface of the third member, but is destroyed.

×: the case where the second member is peeled off from the surface of the first member and/or the surface of the third member (including a state that the second member is peeled off from the surface of the first member and/or the surface of the third member, and also the second member is further destroyed.).

**[Table 4]**

| | Example 1 | Example 2 | Example 3 | Example 4 | Comparative example 1 | Comparative example 2 | Example 5 | Example 6 |
|---|---|---|---|---|---|---|---|---|
| Before thermal shock test | ○ | ○ | ○ | ○ | ○ | × | ○ | ○ |
| After 100 cycles of thermal shock test | ○ | ○ | ○ | ○ | × | × | ○ | ○ |

In the joint structures of Examples 1 to 6, no joint interface peeling was observed in either the tensile test before the thermal shock test or the tensile test after 100 cycles of the thermal shock test.

On the other hand, in the joint structure of Comparative example 1, the joint interface peeling was observed in both the tensile test before the thermal shock test and the tensile test after 100 cycles of the thermal shock test. In the joint structure of Comparative example 2, no joint interface peeling was observed in the tensile test before the thermal shock test, but the joint interface peeling was observed in the tensile test after 100 cycles of the thermal shock test.

### Industrial Applicability

One aspect of the present invention can be used in all products sealed in a metal housing by using an adhesive.

### Reference Signs List

- 1: first member
- 2: second member
- 3: third member
- 4: hole

## Claims

1. A joint structure, comprising:
a first member made of a metal material and having a plurality of holes having an opening diameter of 30 to 100 µm formed in a surface thereof;
a third member made of a metal material the same as or different from that of the first member, or a thermoplastic resin, and having a plurality of holes having an opening diameter of 30 to 100 µm formed in a surface thereof; and
a second member made of a curable resin and joining the surface of the first member in which the holes are formed and the surface of the third member in which the holes are formed.

2. The joint structure according to claim 1, wherein the curable resin is a reactive curable resin.

3. The joint structure according to claim 1 or 2, wherein the reactive curable resin is an epoxy resin.

4. The joint structure according to any one of claims 1 to 3, wherein a viscosity of the curable resin before curing is 25,000 to 90,000 mPa·s at 25°C.

5. The joint structure according to any one of claims 1 to 4, wherein a Shore D hardness of the curable resin after curing is 30 to 90.

6. The joint structure according to any one of claims 1 to 5, wherein a diameter of a cross section of the holes perpendicular to a depth direction increases and then decreases from an opening portion toward the depth direction, or decreases from the opening portion in the depth direction.

7. The joint structure according to any one of claims 1 to 6, wherein a lower limit of a pitch of the holes is a distance at which holes do not overlap, and an upper limit of the pitch is 200 µm.

8. A switch, comprising the joint structure according to any one of claims 1 to 7.

9. A photoelectric sensor, comprising the joint structure according to any one of claims 1 to 7.

10. A proximity sensor, comprising the joint structure according to any one of claims 1 to 7.
